# EUROPEAN PATENT SPECIFICATION

(11) **EP 4 119 709 B1**
(45) Date of publication and mention of the grant of the patent: **13.12.2023**
(21) Application number: 22184878.1
(22) Date of filing: 14.07.2022
(51) Int. Cl.: D03D 1/00, D03D 15/242, D03D 9/00, D03D 13/00, B32B 18/00, C04B 30/02, C04B 35/565, C04B 35/80, D02J 1/18

(54) **HOMOGENEOUS COMPOSITE MICROSTRUCTURE**
HOMOGENE VERBUNDMIKROSTRUKTUR
MICROSTRUCTURE COMPOSITE HOMOGÈNE

(30) Priority: 14.07.2021 US 202117375572
(43) Date of publication of application: 18.01.2023
(73) Proprietor: RTX Corporation, Farmington, CT 06032 (US)
(72) Inventor: SUDRE, Olivier Hl, Glastonbury, 06073 (US); READ, Kathryn S., Marlborough, 06447 (US)
(74) Representative: Dehns

(56) References cited:
- US-A1- 2016 136 925
- US-B2- 9 850 174

## Description

### BACKGROUND

The present invention relates to ceramic matrix composites, and more particularly, to the preparation of woven ceramic fabrics for use in ceramic matrix composites.

The microstructure of a composite component is dictated, in part, by the fiber tow structure. In the case of ceramic matrix composites, the microstructure of the tows also dictates the way the matrix is deposited during chemical vapor infiltration. The microstructure has a default bimodal pore distribution with intra- and inter-tow porosity, with inter-tow porosity typically exceeding intra-tow porosity. Homogenizing the microstructure helps to avoid or reduce stress concentrations in the resulting composite component. Methods for preparing ceramic fabrics are known for example from US 2016/0136925 A1 and US 9 850 174 B2.

### SUMMARY

There is provided herein a method of preparing a woven ceramic fabric for use in a ceramic matrix composite includes transforming a woven fabric sheet having a first tow architecture into a separated woven fabric sheet having a second tow architecture, the first tow architecture including a plurality of warp tows and a plurality of weft tows, and the second tow architecture including a plurality of warp subtows and/or a plurality of weft subtows. Transforming the woven fabric sheet includes separating at least some of the plurality of warp tows and/or the plurality of weft tows into a greater number of corresponding warp subtows and/or weft subtows, respectively, such that second tow architecture includes more warp subtows and/or weft subtows than the first tow architecture comprises warp tows and weft tows, and wherein each of the warp subtows and/or weft subtows includes fewer filaments than corresponding warp tow and/or weft tow. Each of the plurality of warp subtows and/or weft subtows is spaced apart from the closest adjacent warp subtow and/or weft subtow, respectively, a distance of 25 to 230 microns.

### BRIEF DESCRIPTION OF THE DRAWINGS

FIG. 1 is a simplified illustration of a woven fabric sheet having a traditional woven architecture.
FIG. 2 is an enlarged view of area A2 of FIG. 1.
FIG. 3 is a simplified illustration of the woven fabric sheet after separation of its fiber tows.
FIG. 4 is an enlarged view of area A4 of FIG. 3.
FIG. 5 is a flow chart illustrating steps of preparing the woven fabric sheet for use in a ceramic matrix composite.

While the above-identified figures set forth one or more embodiments of the present disclosure, other embodiments are also contemplated, as noted in the discussion. In all cases, this disclosure presents the invention by way of representation and not limitation. It should be understood that numerous other modifications and embodiments can be devised by those skilled in the art, which fall within the scope of the appended claims. The figures may not be drawn to scale, and applications and embodiments of the present invention may include features and components not specifically shown in the drawings.

### DETAILED DESCRIPTION

This disclosure presents a method for increasing the tow count of various traditional woven ceramic fabrics. More specifically, warp and/or weft tows can be divided into smaller subtows using mechanical or non-mechanical means. Various subtow patterns exhibit a range of inter-tow and inter-filament spacing ideal for matrix infiltration.

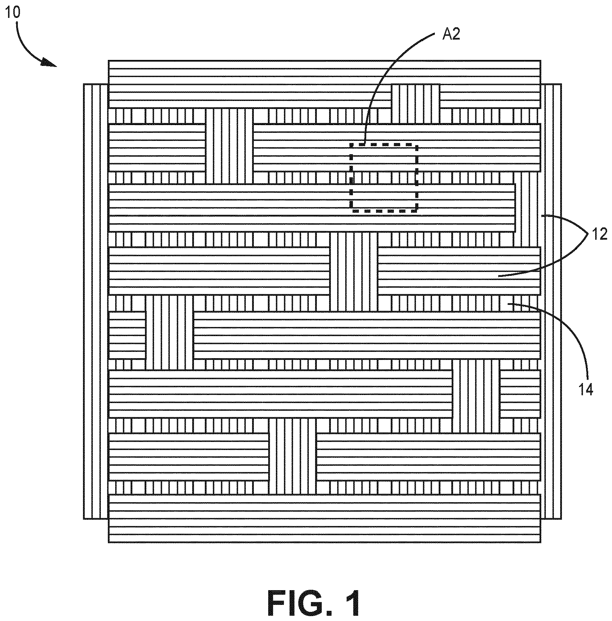

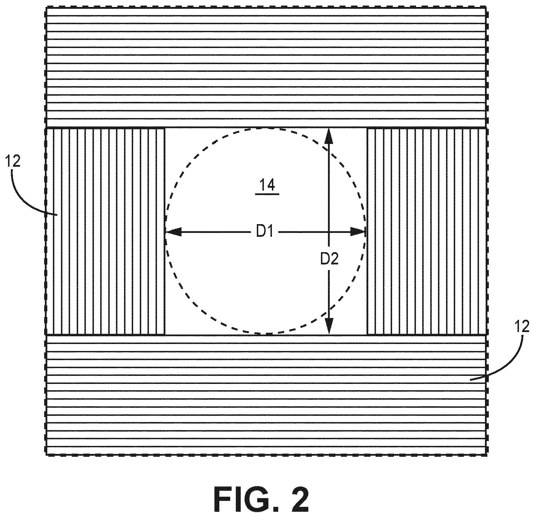

FIG. 1 is a simplified illustration of woven fabric sheet 10. FIG. 2 is an enlarged view of area A2 of FIG. 1. Sheet 10 is formed from warp and weft (i.e., perpendicular) tows 12 which can be arranged in various woven architectures such as plain, harness (e.g., 3, 5, 8, etc.), twill, braid, or non-symmetric to name a few non-limiting examples. Each tow 12, as manufactured, can be a bundle of silicon carbide filaments. Other suitable ceramics are contemplated herein. In an exemplary embodiment, each tow 12 includes roughly 500 filaments, but in alternative embodiments, a tow 12 can include 500 to 2,000 filaments. Sheet 10 can exhibit inter-tow spacing defined by the distances D1 between adjacent warp tows and D2 between adjacent weft tows. The particular spacing between two adjacent warp or weft tows 12 can be generally uniform along the length of the respective tows 12, or can vary along the length of the respective tows 12. Variances typically arise from manufacturing imperfections. A combination of generally uniform and varied inter-tow spacing within sheet 10 is also possible.

Sheet 10 further includes pores 14 at least partially defined by the distance D1 between adjacent warp tows 12 and the distance D2 between adjacent weft tows 12. Distances D1 or D2 could also represent a diameter in rounded pores 14 (represented in FIG. 2 by a dashed circular line). Pores 14 can be three dimensional with additional dimensions generally orthogonal to D1 and/or D2 (not shown). Depending on the particular woven architecture of sheet 10, D1 can be generally equal to D2 as shown, but D1 can also be greater than D2, and vice versa. In the embodiment shown, the average size of D1 and/or D2 can be between 300 to 500 microns. In an exemplary embodiment, D1 and/or D2 can be about 400 microns. It should be understood that sheet 10 can include a distribution of pore 14 dimensions (e.g., ranging from 300 to 500 microns) and shapes (e.g., both rounded and straight-edged), because of fabric deformation and lack of straightness of tows 12.

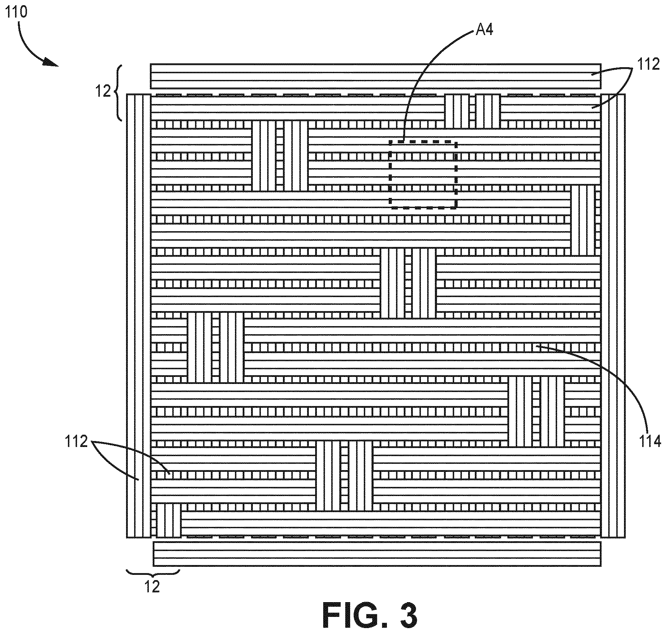

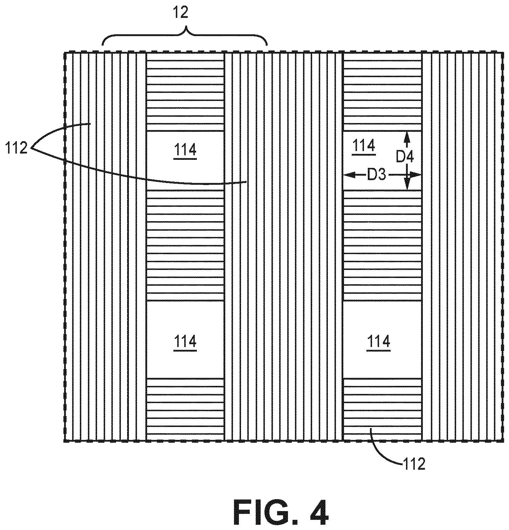

It can be desirable to reduce inter-tow spacing and the size of pores 14 while modifying pore distribution within sheet 10. FIG. 3 is a simplified illustration of woven fabric sheet 110. FIG. 4 is an enlarged view of area A4 of FIG. 3. Sheet 110 represents sheet 10 after the separation/splitting/division of warp and weft tows 12 into subtows 112. As used herein a "subtow" refers to a grouping of a subset of filaments from a parent tow 12 as a result of exposing sheet 10 to the separation means of method 200, discussed in greater detail below. Accordingly, sheet 110 can be referred to as a separated sheet. It can also be appropriate to refer to sheet 110 as a split or divided sheet.

As shown in FIGS. 3 and 4, each tow 12 is separated into two subtows 112 (i.e., a "two-split" arrangement) using mechanical or other means discussed in greater detail below. As such, the number and distribution of pores 114 in sheet 110 can increase as compared to sheet 10, while the dimensions of each pore 114 can decrease in comparison to a single pore 14. In the embodiment shown, each pore 114 is defined by the distance D3 between adjacent warp tows 112 and the distance D4 between adjacent weft tows 112. Where D3 is generally equal to D4, D3 and/or D4 can be between 75 and 125 microns. In an exemplary embodiment, the average size of D3 and/or D4 can be about 100 microns, or a 75% reduction in pore size. As was the case with D1 and D2, D3 and/or D4 can also be a diameter for a rounded pore 114. Additionally, sheet 110 can also include a distribution of pore sizes (e.g., ranging from 75 to 100 microns) and shapes (e.g., rounded and straight-edged).

Other subtow arrangements are possible. For example, only the tows 12 in either the warp or weft direction can be split into two subtows 112 (i.e., a "half-split" arrangement). Such an arrangement may be a result of the directionality of the separation means or asymmetry of the weave pattern of sheet 10, but may still provide a sufficient increase in pore density and a decrease in individual pore dimensions. Further, the resultant pores in a half-split woven fabric sheet are likely to have oblong dimensions (i.e., the distances between adjacent warp and weft subtows are not equal to one another).

Another subtow arrangement results in the splitting of each tow 12 in both the warp and weft directions into five subtows (i.e., a "five-split" arrangement). A five-split arrangement may best be achieved beginning with a sheet 10 having an ends-per-inch (EPI) and/or picks-per-inch (PPI) number of 8 to about 16 (equal to an end-per cm or picks-per-cm number of 3.15 to 6.30) so that there is sufficient room for the fivefold increase in subtows to spread out and become spaced apart from the immediately adjacent subtow(s). In such an arrangement, dimensions (i.e., distance or diameter) of the resultant pores can be reduced by about 70% to 80%. For example, average pore size in the original sheet may be 800 to 1100 microns, and after splitting each tow 12 into five subtows, the pores may be 200 to 230 microns.

Other subtow multi-split arrangements are possible without departing from the scope of the invention. For example, warp and/or weft tows 12 can each be separated into three or four subtows each. Tows 12 can alternatively be split into more than 5 (e.g., six, seven, eight, etc.) subtows. The resulting inter-tow spacing/pore size can be as low as 25 microns. In particular, sheets having a low EPI/PPI number or a high-filament count in tows 12 can lend themselves to a higher split count with respect to resultant subtows. In some cases, particularly those with higher EPI/PPI numbers, sheet 10 may have very low inter-tow spacing and/or overlapping tows of the same direction (e.g., adjacent warp tows 12). In such cases, separation means can be used to create greater and more uniform overall inter-tow spacing in the resulting separated sheet.

It should be noted that subtows 112 derived from a particular tow 12 will ideally, but not always, be evenly divided. For example, in a two-split arrangement, the formation of two subtows 112 from a tow 12 of about 500 filaments can result in two subtows 112 of about 250 filaments each. For a five-split arrangement, the same tow 12 may be divided into five 100-filament subtows. However, as the precision of separation means can vary, the 500 filaments of tow 12 may not always be evenly apportioned among the subtows 112. For a two-split arrangement, a subtow 112 may contain 40% to 60% (200 to 300 filaments) of the 500 filaments. For a five-split arrangement, a subtow may contain 15% to 25% (75 to 125 filaments) of the 500 filaments. The splitting of a tow 12 into more than five subtows 112 can result in subtows 112 having as few as 50 filaments. It should also be noted that individual filaments may disperse in such a manner during tow separation as to be grouped into more than one adjacent subtow 112 along a length of the filament, such that adjacent subtows can intermingle. Additionally, not every tow 12 will separate completely along its length and/or into the exact number of desired subtows. Thus, the extent of desired tow separation will ideally occur in 100% of the area of sheet 10 exposed to separation means, but in practice, 75% to 100%, or as little as 60% of the exposed area can exhibit the desired degree/extent of tow separation. Such cases still result in a sufficiently homogenous microstructure for the purposes of this disclosure.

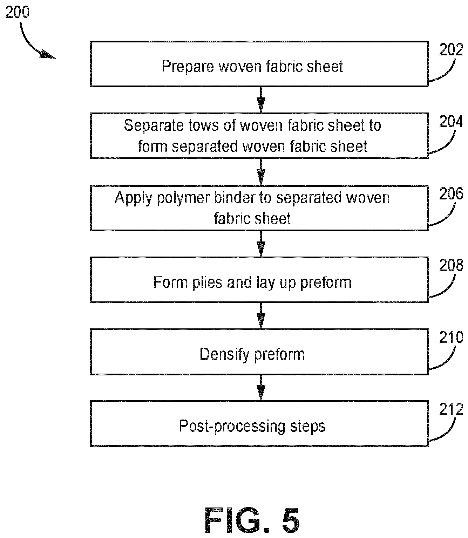

FIG. 5 is a flowchart illustrating selected steps of method 200, used to prepare woven fabric sheet 10 for use in a ceramic matrix composite. Steps 202-210 of method 200 are discussed in combination with FIGS. 1-5.

At step 202, woven fabric sheet 10 can optionally be prepared for tow separation. In one embodiment, preparing sheet 10 can mean desizing tows 12 using a heat treatment or other suitable means to remove any preexisting polymer coatings on tows 12. This allows individual filaments to move more freely during separation. Preparing can additionally and/or alternatively refer to the drying of sheet 10. Preparing can further refer to the wetting of sheet 10 with water or a polymer binder, such as poly-vinyl alcohol (PVA) or poly-vinyl butyral (PVB). Finally, preparing can additionally include the detensioning of sheet 10 to facilitate filament and tow/subtow movement during separation.

At step 204, tows 12 of woven fabric sheet 10 can be separated using one or more separation means. Separation of tows 12 may be achieved via mechanical means such as a continuous or pulsed-flow air knife to impinge tows 12 with an air stream. Insertion of studs into tows 12 using a roller or other studded element is another suitable mechanical separation method. Non-mechanical means, such as electrostatic dispersion, can additionally and/or alternatively be used. Separation may not occur in all tows 12 of a given direction. Separation can result in the reduced pores sizes and tow sizes (i.e., filament content) discussed above. Furthermore, inter-filament spacing in a subtow 112 may be greater than inter-filament spacing within the original tow 12 due to one or a combination of spreading after separation or relaxation of the woven architecture from desizing or detensioning. Thus, inter-tow spacing (i.e., size of pores 114) decreases and inter-filament spacing increases, creating a more homogeneous bimodal pore distribution. Inter-tow spacing will generally be between 25 and 230 microns across the various separated architectures disclosed herein.

At step 206, a polymer binder material (e.g., PVA or PVB) can optionally be applied to separated woven fabric sheet 110, if not already applied at preparation step 202.

At step 208, one or more sheets 110 can be formed into plies and arranged into a desired two or three dimensional preform structure. Step 208 can further optionally include deposition of particles onto the preform structure. The volume fraction of particles added to the preform structure can be relatively low (e.g., 1% to 5%). Such particles may be formed from a ceramic material (e.g., silicon carbide, boron carbide, silicon nitride, pure silicon, pure carbon, aluminum oxide, or hafnia) and are intended to remain as part of the structure through matrix formation and help enhance matrix formation and fortify the resultant CMC. The particles can alternatively be formed from a fugitive material designed to be later decomposed by thermal or chemical means. Fugitive particles can be formed from a polymer material such as PVA, PVB, or polymethyl methacrylate (PMMA). Fugitive particles can help maintain spacing of pores 114 and subtows 112 of sheet 110, as well as inter-ply spacing during subsequent processing steps. Ceramic or fugitive particles can alternatively be applied in steps 202 or 206.

At step 210, the preform structure can undergo matrix formation and densification using a chemical vapor infiltration or deposition (CVI or CVD) process. During densification, the plies are infiltrated by reactant vapors, and a gaseous precursor deposits on the fibers. The matrix material can be a silicon carbide or other suitable ceramic material. Densification is carried out until the resulting CMC has reached the desired residual porosity. Typically, one or several interphases are deposited prior to the matrix to ensure that the composite fails in a non-brittle manner.

During coating and matrix formation of standard (i.e., non-separated) architectures, the diffusion rate of the infiltrant inside of tows (i.e., the inter-filament spaces) is a fraction of the rate of the infiltrant through the larger pores (i.e., inter-tow space) along the thickness direction of the preform panel. For example, the rate of inter-filament diffusion can be on the order of one-one hundredth the rate of inter-tow diffusion. In any of the disclosed, more homogenous architectures, the disparity between the time of diffusion of the infiltrant to the center of a subtow from its edge and the time of diffusion of the same infiltrant from the surface of the component to its center is greatly reduced. For example, in a preform structure having an average tow size (e.g., diameter) of 1 mm and a panel thickness of 2 mm, the rates of diffusion become near equivalent if the tows are split into 5 subtows. Any of the split arrangements discussed herein have a similar favorable effect. Furthermore, inter-filament spaces are more accessible to the matrix precursor materials, and the inter-tow spaces (i.e., pores 114) can be more quickly and evenly filled with the precursor materials. Thus, the overall duration of the CVI/CVD process may be greatly reduced, while the matrix precursor material is more evenly distributed within the preform structure.

At step 212, various post-processing steps can be performed, such as the application of one or more protective coatings (e.g., environmental and/or thermal barrier coatings). A bond coat can also be applied to facilitate bonding between the CMC and a protective coating. Other protective coatings, especially those suitable for use in a gas turbine engine environment, are contemplated herein.

It should be understood that the fabrication of a composite from tow-separated fabrics will also benefit other densification techniques such as polymer infiltration and pyrolysis (PIP) or melt infiltration as a more homogeneous microstructure of the fiber microstructure will facilitate the densification process and improve the quality of the product.

A CMC component formed with the disclosed separated woven fabric(s) can be incorporated into aerospace, maritime, or industrial equipment, to name a few, non-limiting examples.

### Discussion of Possible Embodiments

The following are non-exclusive descriptions of possible embodiments of the present invention.

A method of preparing a woven ceramic fabric for use in a ceramic matrix composite includes transforming a woven fabric sheet having a first tow architecture into a separated woven fabric sheet having a second tow architecture, the first tow architecture including a plurality of warp tows and a plurality of weft tows, and the second tow architecture including a plurality of warp subtows and/or a plurality of weft subtows. Transforming the woven fabric sheet includes separating at least some of the plurality of warp tows and/or the plurality of weft tows into a greater number of corresponding warp subtows and/or weft subtows, respectively, such that second tow architecture includes more warp subtows and/or weft subtows than the first tow architecture comprises warp tows and weft tows, and wherein each of the warp subtows and/or weft subtows includes fewer filaments than corresponding warp tow and/or weft tow. Each of the plurality of warp subtows and/or weft subtows is spaced apart from the closest adjacent warp subtow and/or weft subtow, respectively, a distance of 25 to 230 microns.

The method of the preceding paragraph can optionally include, additionally and/or alternatively, any one or more of the following features, configurations and/or additional components:
In the above method, the woven ceramic fabric can include silicon carbide.

In any of the above methods, transforming the woven fabric sheet can include separating at least some of the plurality of warp tows and the plurality of weft tows into a greater number of corresponding warp subtows and weft subtows, respectively.

In any of the above methods, the greater number can be two warp subtows for every warp tow and two weft subtows for every weft tow, such that the second tow architecture can include twice as many warp subtows and weft subtows as the first architecture has warp tows and weft tows.

In any of the above methods, each of the warp subtows and the weft subtows can include 40% to 60% the number of filaments as the corresponding warp tow and weft tow.

In any of the above methods, transforming the woven fabric sheet into a separated woven fabric sheet can further include reducing an average inter-tow pore size of the woven fabric sheet by 75%.

In any of the above methods, the greater number can be five warp subtows for every warp tow and five weft subtows for every weft tow, such that the second tow architecture can include five times as many warp subtows and weft subtows as the first architecture has warp tows and weft tows.

In any of the above methods, each of the warp subtows and the weft subtows can include 15% to 25% the number of filaments as the corresponding warp tow and weft tow.

In any of the above methods, transforming the woven fabric sheet into a separated woven fabric sheet can further include reducing an average inter-tow pore size of the woven fabric sheet by 70% to 80%.

In any of the above methods, the woven fabric sheet can have an ends-per-inch or picks-per-inch count of ranging from 8 to 16.

In any of the above methods, the greater number can be three warp subtows for every warp tow and three weft subtows for every weft tow, such that the second tow architecture can include three times as many warp subtows and weft subtows as the first architecture has warp tows and weft tows.

In any of the above methods, the greater number can be four warp subtows for every warp tow and four weft subtows for every weft tow, such that the second tow architecture can include four times as many warp subtows and weft subtows as the first architecture has warp tows and weft tows.

Any of the above methods can further include preparing the woven fabric sheet before the step of transforming the woven fabric sheet, and preparing the woven fabric sheet can include wetting the woven fabric sheet with one of water, PVA, and PVB.

In any of the above methods, separating the at least some of the plurality of warp tows or the plurality of weft tows into a greater number of corresponding warp subtows or weft subtows can include one of an air knife and a studded roller.

Any of the above methods can further include applying one of PVA and PVB to the separated woven fabric sheet.

Any of the above methods can further include forming the separated woven fabric sheet into a plurality of plies, and laying up the plurality of plies to form a preform.

Any of the above methods can further include: forming the separated woven fabric sheet into a plurality of plies; laying up the plurality of plies to form a preform; and densifying the preform.

Any of the above methods can further include applying ceramic particles to the preform prior to densifying the preform, the ceramic particles being formed from one or a combination of silicon carbide, boron carbide, silicon nitride, pure silicon, pure carbon, aluminum oxide, and hafnia.

Any of the above methods can further include applying fugitive particles to the preform prior to densifying the preform, the fugitive particles being formed from a polymer material.

Any of the above methods can further include densifying the preform using one or a combination of chemical vapor infiltration, chemical vapor deposition, polymer infiltration and pyrolysis, and melt infiltration.

In any of the above methods, the woven fabric sheet can include a first number of pores defined by the warp tows and weft tows, and wherein the separated woven fabric sheet can include a greater number of pores defined by the warp subtows and weft subtows.

While the invention has been described with reference to an exemplary embodiment(s), it will be understood by those skilled in the art that various changes may be made and equivalents may be substituted for elements thereof without departing from the scope of the appended claims. Therefore, it is intended that the invention not be limited to the particular embodiment(s) disclosed, but that the invention will include all embodiments falling within the scope of the appended claims.

## Claims

1. A method of preparing a woven ceramic fabric (10; 110) for use in a ceramic matrix composite, **characterized in** the method comprising:
transforming a woven fabric sheet (10) having a first tow architecture into a separated woven fabric sheet (110) having a second tow architecture, the first tow architecture comprising a plurality of warp tows (12) and a plurality of weft tows (12), and the second tow architecture comprising a plurality of warp subtows (112) and/or a plurality of weft subtows (112);
wherein transforming the woven fabric sheet (10) comprises separating at least some of the plurality of warp tows (12) and/or the plurality of weft tows (10) into a greater number of corresponding warp subtows (112) and/or weft subtows (112), respectively, such that second tow architecture comprises more warp subtows (112) and/or weft subtows (112) than the first tow architecture comprises warp tows (12) and/or weft tows (12), and wherein each of the warp subtows (112) and/or weft subtows (112) comprises fewer filaments than corresponding warp tow (12) or weft tow (12); and
wherein each of the plurality of warp subtows (112) and/or weft subtows (112) is spaced apart from the closest adjacent warp subtow (112) and/or weft subtow (112), respectively, a distance of 25 to 230 microns.

2. The method of claim 1, wherein the woven ceramic fabric (10; 110) comprises silicon carbide.

3. The method of claim 1 or 2, wherein transforming the woven fabric sheet (10) comprises separating at least some of the plurality of warp tows (12) and the plurality of weft tows (12) into a greater number of corresponding warp subtows (112) and weft subtows (112), respectively.

4. The method of claim 3, wherein the greater number is two warp subtows (112) for every warp tow (12) and two weft subtows (112)for every weft tow (12) such that the second tow architecture comprises twice as many warp subtows (112) and weft subtows (112) as the first architecture comprises warp tows (12) and weft tows (12), wherein optionally:
each of the warp subtows (112) and the weft subtows (112) comprises 40% to 60% the number of filaments as the corresponding warp tow (12) and weft tow (12); and/or
transforming the woven fabric sheet (10) into a separated woven fabric sheet (110) further comprises reducing an average inter-tow pore size of the woven fabric sheet by 75%.

5. The method of claim 3, wherein the greater number is five warp subtows (112) for every warp tow (12) and five weft subtows (112) for every weft tow (12), such that the second tow architecture comprises five times as many warp subtows (112) and weft subtows (112) as the first architecture comprises warp tows (12) and weft tows (12) wherein optionally:
each of the warp subtows (112) and the weft subtows (112) comprises 15% to 25% the number of filaments as the corresponding warp tow (12) and weft tow (12); and/or
transforming the woven fabric sheet (10) into a separated woven fabric sheet (110) further comprises reducing an average inter-tow pore size of the woven fabric sheet (10) by 70% to 80%.

6. The method of claim 5, wherein the woven fabric sheet (10) has an ends-per-inch or picks-per-inch count of ranging from 8 to 16 (3.15 to 6.30 ends-per-cm/picks-per-cm).

7. The method of claim 3, wherein:
the greater number is three warp subtows (112) for every warp tow (12) and three weft subtows (112) for every weft tow (12), such that the second tow architecture comprises three times as many warp subtows (112) and weft subtows (112) as the first architecture comprises warp tows (12) and weft tows (12); or
the greater number is four warp subtows (112) for every warp tow (12) and four weft subtows (112) for every weft tow (12), such that the second tow architecture comprises four times as many warp subtows (112) and weft subtows (112) as the first architecture comprises warp tows (12) and weft tows (12).

8. The method of any preceding claim, and further comprising: preparing the woven fabric sheet (10) before the step of transforming the woven fabric sheet (10), wherein preparing the woven fabric sheet (10) comprises wetting the woven fabric sheet (10) with one of water, poly-vinyl alcohol (PVA), and poly-vinyl butyral (PVB).

9. The method of any preceding claim, wherein separating the at least some of the plurality of warp tows (12) or the plurality of weft tows (12) into a greater number of corresponding warp subtows (112) or weft subtows (112) comprises using one of an air knife and a studded roller.

10. The method of any preceding claim, and further comprising: applying one of PVA and PVB to the separated woven fabric sheet (110).

11. The method of any preceding claim, and further comprising:
forming the separated woven fabric sheet (110) into a plurality of plies; and
laying up the plurality of plies to form a preform.

12. The method of claim 11, and further comprising: applying ceramic particles to the preform prior to densifying the preform, the ceramic particles being formed from one or a combination of silicon carbide, boron carbide, silicon nitride, pure silicon, pure carbon, aluminum oxide, and hafnia.

13. The method of claim 11 or 12 and further comprising: applying fugitive particles to the preform prior to densifying the preform, the fugitive particles being formed from a polymer material.

14. The method of any of claims 11 to 13, and further comprising: densifying the preform using one or a combination of a chemical vapor infiltration, chemical vapor deposition, polymer infiltration and pyrolysis, and melt infiltration.

15. The method of any preceding claim, wherein the woven fabric sheet (10) comprises a first number of pores (14) defined by the warp tows (12) and weft tows (12), and wherein the separated woven fabric sheet (110) comprises a greater number of pores (114) defined by the warp subtows (112) and/or weft subtows (112).

## Patentansprüche

1. Verfahren zum Vorbereiten eines gewebten Keramikstoffs (10; 110) zur Verwendung in einem Keramikmatrix-Verbundwerkstoff, **dadurch gekennzeichnet, dass** das Verfahren Folgendes umfasst:
Umwandeln einer gewebten Stoffbahn (10), die eine erste Spinnkabelarchitektur aufweist, in eine getrennte gewebte Stoffbahn (110), die eine zweite Spinnkabelarchitektur aufweist, wobei die erste Spinnkabelarchitektur eine Vielzahl von Kettspinnkabeln (12) und eine Vielzahl von Schussspinnkabeln (12) umfasst und die zweite Spinnkabelarchitektur eine Vielzahl von Kettunterspinnkabeln (112) und/oder eine Vielzahl von Schussunterspinnkabeln (112) umfasst;
wobei Umwandeln der gewebten Stoffbahn (10) Trennen mindestens einiger der Vielzahl von Kettspinnkabeln (12) und/oder der Vielzahl von Schussspinnkabeln (10) jeweils in eine größere Anzahl entsprechender Kettunterspinnkabeln (112) und/oder Schussunterspinnkabeln (112) umfasst, sodass die zweite Spinnkabelarchitektur mehr Kettunterspinnkabel (112) und/oder Schussunterspinnkabel (112) umfasst, als die erste Spinnkabelarchitektur Kettspinnkabel (12) und/oder Schussspinnkabel (12) umfasst, und wobei jedes der Kettunterspinnkabel (112) und/oder Schussunterspinnkabel (112) weniger Filamente als das entsprechende Kettspinnkabel (12) oder Schussspinnkabel (12) umfasst; und
wobei jedes der Vielzahl von Kettunterspinnkabeln (112) und/oder Schussunterspinnkabeln (112) jeweils von dem nächstgelegenen angrenzenden Kettunterspinnkabel (112) und/oder Schussunterspinnkabel (112) um einen Abstand von 25 bis 230 Mikrometer beabstandet ist.

2. Verfahren nach Anspruch 1, wobei der gewebte Keramikstoff (10; 110) Siliziumkarbid umfasst.

3. Verfahren nach Anspruch 1 oder 2, wobei Umwandeln der gewebten Stoffbahn (10) Trennen mindestens einiger der Vielzahl von Kettspinnkabeln (12) und der Vielzahl von Schussspinnkabeln (12) in eine größere Anzahl entsprechender Kettunterspinnkabel (112) beziehungsweise Schussunterspinnkabel (112) umfasst.

4. Verfahren nach Anspruch 3, wobei die größere Anzahl zwei Kettunterspinnkabel (112) für jedes Kettspinnkabel (12) und zwei Schussunterspinnkabel (112) für jedes Schussspinnkabel (12) beträgt, sodass die zweite Spinnkabelstruktur doppelt so viele Kettunterspinnkabeln (112) und Schussunterspinnkabel (112) umfasst, wie die erste Architektur Kettspinnkabel (12) und Schussspinnkabel (12) umfasst, wobei optional:
jedes der Kettunterspinnkabel (112) und Schussunterspinnkabel (112) 40 % bis 60 % der Anzahl an Filamenten wie das entsprechende Kettspinnkabel (12) und Schussspinnkabel (12) umfasst; und/oder
Umwandeln der gewebten Stoffbahn (10) in eine getrennte gewebte Stoffbahn (110) ferner Reduzieren einer durchschnittlichen Porengröße zwischen den Spinnkabeln der gewebten Stoffbahn um 75 % umfasst.

5. Verfahren nach Anspruch 3, wobei die größere Anzahl fünf Kettunterspinnkabel (112) für jedes Kettspinnkabel (12) und fünf Schussunterspinnkabel (112) für jedes Schussspinnkabel (12) beträgt, sodass die zweite Spinnkabelstruktur fünfmal so viele Kettunterspinnkabeln (112) und Schussunterspinnkabel (112) umfasst, wie die erste Architektur Kettspinnkabel (12) und Schussspinnkabel (12) umfasst, wobei optional:
jedes der Kettunterspinnkabel (112) und Schussunterspinnkabel (112) 15 % bis 25 % der Anzahl an Filamenten wie das entsprechende Kettspinnkabel (12) und Schussspinnkabel (12) umfasst; und/oder
Umwandeln der gewebten Stoffbahn (10) in eine getrennte gewebte Stoffbahn (110) ferner Reduzieren einer durchschnittlichen Porengröße zwischen den Spinnkabeln der gewebten Stoffbahn (10) um 70 % bis 80 % umfasst.

6. Verfahren nach Anspruch 5, wobei die gewebte Stoffbahn (10) eine Anzahl von Enden pro Zoll oder Schüssen pro Zoll in einem Bereich von 8 bis 16 (3,15 bis 6,30 Enden pro cm/Schüsse pro cm) aufweist.

7. Verfahren nach Anspruch 3, wobei:
die größere Anzahl drei Kettunterspinnkabel (112) für jedes Kettspinnkabel (12) und drei Schussunterspinnkabel (112) für jedes Schussspinnkabel (12) beträgt, sodass die zweite Spinnkabelstruktur dreimal so viele Kettunterspinnkabeln (112) und Schussunterspinnkabel (112) umfasst, wie die erste Architektur Kettspinnkabel (12) und Schussspinnkabel (12) umfasst; oder
die größere Anzahl vier Kettunterspinnkabel (112) für jedes Kettspinnkabel (12) und vier Schussunterspinnkabel (112) für jedes Schussspinnkabel (12) beträgt, sodass die zweite Spinnkabelstruktur viermal so viele Kettunterspinnkabeln (112) und Schussunterspinnkabel (112) umfasst, wie die erste Architektur Kettspinnkabel (12) und Schussspinnkabel (12) umfasst.

8. Verfahren nach einem der vorhergehenden Ansprüche und ferner Folgendes umfassend: Vorbereiten der gewebten Stoffbahn (10) vor dem Schritt eines Umwandelns der gewebten Stoffbahn (10), wobei Vorbereiten der gewebten Stoffbahn (10) Benetzen der gewebten Stoffbahn (10) mit einem von Wasser, Polyvinylalkohol (PVA) und Polyvinylbutyral (PVB) umfasst.

9. Verfahren nach einem der vorhergehenden Ansprüche, wobei Trennen der mindestens einigen der Vielzahl von Kettspinnkabeln (12) und der Vielzahl von Schussspinnkabeln (12) in eine größere Anzahl entsprechender Kettunterspinnkabel (112) oder Schussunterspinnkabel (112) Verwenden eines von einem Luftmesser und einer benadelten Walze umfasst.

10. Verfahren nach einem der vorhergehenden Ansprüche und ferner Folgendes umfassend: Aufbringen eines von PVA oder PVB auf die getrennte gewebte Stoffbahn (110).

11. Verfahren nach einem der vorhergehenden Ansprüche und ferner Folgendes umfassend:
Ausbilden der getrennten gewebten Stoffbahn (110) in eine Vielzahl von Lagen; und
Auflegen der Vielzahl von Lagen, um einen Vorformling auszubilden.

12. Verfahren nach Anspruch 11 und ferner Folgendes umfassend: Aufbringen von Keramikpartikeln auf den Vorformling vor einem Verdichten des Vorformlings, wobei die Keramikpartikel aus einem oder einer Kombination von Siliziumkarbid, Borkarbid, Siliziumnitrid, reinem Silizium, reinem Kohlenstoff, Aluminiumoxid und Hafniumoxid ausgebildet sind.

13. Verfahren nach Anspruch 11 oder 12 und ferner Folgendes umfassend: Aufbringen flüchtiger Partikel auf den Vorformling vor einem Verdichten des Vorformlings, wobei die flüchtigen Partikel aus einem Polymermaterial ausgebildet sind.

14. Verfahren nach einem der Ansprüche 11 bis 13 und ferner Folgendes umfassend: Verdichten des Vorformlings unter Verwendung eines oder einer Kombination von einer chemischen Dampfinfiltration, chemischen Dampfabscheidung, Polymerinfiltration und -pyrolyse und Schmelzinfiltration.

15. Verfahren nach einem der vorhergehenden Ansprüche, wobei die gewebte Stoffbahn (10) eine erste Anzahl von Poren (14) umfasst, die durch die Kettspinnkabel (12) und Schussspinnkabel (12) definiert ist, und wobei die getrennte gewebte Stoffbahn (110) eine größere Anzahl von Poren (114) umfasst, die durch die Kettunterspinnkabel (112) und/oder Schussunterspinnkabel (112) definiert ist.

## Revendications

1. Procédé de préparation d'un tissu céramique tissé (10 ; 110) destiné à être utilisé dans un composite à matrice céramique, caractérisé dans le procédé comprend :
la transformation d'une feuille de tissu tissé (10) ayant une première architecture de câble en une feuille de tissu tissé séparée (110) ayant une seconde architecture de câble, la première architecture de câble comprenant une pluralité de câbles de chaîne (12) et une pluralité de câbles de trame (12), et la seconde architecture de câble comprenant une pluralité de sous-câbles de chaîne (112) et/ou une pluralité de sous-câbles de trame (112) ;
dans lequel la transformation de la feuille de tissu tissé (10) comprend la séparation d'au moins certains de la pluralité de câbles de chaîne (12) et/ou de la pluralité de câbles de trame (10) en un plus grand nombre de sous-câbles de chaîne (112) et/ou sous-câbles de trame (112) correspondants, respectivement, de sorte que la seconde architecture de câble comprend plus de sous-câbles de chaîne (112) et/ou de sous-câbles de trame (112) que la première architecture de câble ne comprend de câbles de chaîne (12) et/ou de câbles de trame (12), et dans lequel chacun des sous-câbles de chaîne (112) et/ou sous-câbles de trame (112) comprend moins de filaments que le câble de chaîne (12) ou le câble de trame (12) correspondant ; et
dans lequel chacun de la pluralité de sous-câbles de chaîne (112) et/ou de sous-câbles de trame (112) est espacé du sous-câble de chaîne (112) et/ou du sous-câble de trame (112) adjacent le plus proche, respectivement, d'une distance de 25 à 230 microns.

2. Procédé selon la revendication 1, dans lequel le tissu céramique tissé (10 ; 110) comprend du carbure de silicium.

3. Procédé selon la revendication 1 ou 2, dans lequel la transformation de la feuille de tissu tissé (10) comprend la séparation d'au moins certains de la pluralité de câbles de chaîne (12) et de la pluralité de câbles de trame (12) en un plus grand nombre de sous-câbles de chaîne (112) et sous-câbles de trame (112) correspondants, respectivement.

4. Procédé selon la revendication 3, dans lequel le plus grand nombre est deux sous-câbles de chaîne (112) pour chaque câble de chaîne (12) et deux sous-câbles de trame (112) pour chaque câble de trame (12), de sorte que la seconde architecture de câble comprend deux fois plus de sous-câbles de chaîne (112) et de sous-câbles de trame (112) que la première architecture ne comprend de câbles de chaîne (12) et de câbles de trame (12), dans lequel éventuellement :
chacun des sous-câbles de chaîne (112) et des sous-câbles de trame (112) comprend 40 % à 60 % du nombre de filaments comme le câble de chaîne (12) et le câble de trame (12) correspondants ; et/ou
la transformation de la feuille de tissu tissé (10) en une feuille de tissu tissé séparée (110) comprend en outre la réduction de 75 % de la taille moyenne des pores entre les câbles de la feuille de tissu tissé.

5. Procédé selon la revendication 3, dans lequel le plus grand nombre est cinq sous-câbles de chaîne (112) pour chaque câble de chaîne (12) et cinq sous-câbles de trame (112) pour chaque câble de trame (12), de sorte que la seconde architecture de câble comprend cinq fois plus de sous-câbles de chaîne (112) et de sous-câbles de trame (112) que la première architecture ne comprend de câbles de chaîne (12) et de câbles de trame (12), dans lequel éventuellement :
chacun des sous-câbles de chaîne (112) et des sous-câbles de trame (112) comprend 15 % à 25 % du nombre de filaments comme le câble de chaîne (12) et le câble de trame (12) correspondants ; et/ou
la transformation de la feuille de tissu tissé (10) en une feuille de tissu tissé séparée (110) comprend en outre la réduction de 70 % à 80 % de la taille moyenne des pores entre les câbles de la feuille de tissu tissé (10).

6. Procédé selon la revendication 5, dans lequel la feuille de tissu tissé (10) a un nombre d'extrémités par pouce ou de duites par pouce allant de 8 à 16 (3,15 à 6,30 extrémités par cm/duites par cm).

7. Procédé selon la revendication 3, dans lequel :
le plus grand nombre est trois sous-câbles de chaîne (112) pour chaque câble de chaîne (12) et trois sous-câbles de trame (112) pour chaque câble de trame (12), de sorte que la seconde architecture de câble comprend trois fois plus de sous-câbles de chaîne (112) et de sous-câbles de trame (112) que la première architecture ne comprend de câbles de chaîne (12) et de câbles de trame (12) ; ou
le plus grand nombre est quatre sous-câbles de chaîne (112) pour chaque câble de chaîne (12) et quatre sous-câbles de trame (112) pour chaque câble de trame (12), de sorte que la seconde architecture de câble comprend quatre fois plus de sous-câbles de chaîne (112) et de sous-câbles de trame (112) que la première architecture ne comprend de câbles de chaîne (12) et de câbles de trame (12).

8. Procédé selon une quelconque revendication précédente, et comprenant en outre : la préparation de la feuille de tissu tissé (10) avant l'étape de transformation de la feuille de tissu tissé (10), dans lequel la préparation de la feuille de tissu tissé (10) comprend le mouillage de la feuille de tissu tissé (10) avec de l'eau, de l'alcool polyvinylique (PVA) et du poly-vinylbutyral (PVB).

9. Procédé selon une quelconque revendication précédente, dans lequel la séparation des au moins certains de la pluralité de câbles de chaîne (12) ou de la pluralité de câbles de trame (12) en un plus grand nombre de sous-câbles de chaîne (112) ou de sous-câbles de trame (112) correspondants comprend l'utilisation d'une lame d'air ou d'un rouleau à crampons.

10. Procédé selon une quelconque revendication précédente, comprenant en outre : l'application de PVA ou de PVB sur la feuille de tissu tissé séparée (110).

11. Procédé selon une quelconque revendication précédente, comprenant en outre :
la formation de la feuille de tissu tissé séparée (110) en une pluralité de plis ; et
la superposition de la pluralité de plis pour former une préforme.

12. Procédé selon la revendication 11, comprenant en outre : l'application de particules céramiques sur la préforme avant de densifier la préforme, les particules céramiques étant formées à partir d'un ou d'une combinaison de carbure de silicium, de carbure de bore, de nitrure de silicium, de silicium pur, de carbone pur, d'oxyde d'aluminium et d'hafnia.

13. Procédé selon la revendication 11 ou 12, comprenant en outre : l'application de particules fugitives sur la préforme avant de densifier la préforme, les particules fugitives étant formées à partir d'un matériau polymère.

14. Procédé selon l'une quelconque des revendications 11 à 13, comprenant en outre : la densification de la préforme à l'aide d'un ou d'une combinaison d'une infiltration chimique en phase vapeur, d'un dépôt chimique en phase vapeur, d'une infiltration et d'une pyrolyse de polymère, et d'une infiltration par fusion.

15. Procédé selon une quelconque revendication précédente, dans lequel la feuille de tissu tissé (10) comprend un premier nombre de pores (14) définis par les câbles de chaîne (12) et les câbles de trame (12), et dans lequel la feuille de tissu tissé séparée (110) comprend un plus grand nombre de pores (114) définis par les sous-câbles de chaîne (112) et/ou sous-câbles de trame (112).
